# EUROPEAN PATENT SPECIFICATION

(11) **EP 1 246 748 B1**
(45) Date of publication and mention of the grant of the patent: **28.05.2003**
(21) Application number: 01942344.1
(22) Date of filing: 12.01.2001
(51) Int. Cl.: B62D 33/02

(54) **DEVICE FOR A STANCHION ON A LOADCARRYING PLATFORM OF A VEHICLE**
STÜTZEN-ANORDNUNG AUF EINER FAHRZEUG-LADEFLÄCHE
DISPOSITIF DE MONTANT SUR UNE PLATE-FORME DE CHARGEMENT DE VEHICULE

(30) Priority: 12.01.2000 SE 0000075
(43) Date of publication of application: 09.10.2002
(73) Proprietor: Rosén, Göran, 640 50 Björnlunda (SE)
(72) Inventor: Rosén, Göran, 640 50 Björnlunda (SE)
(74) Representative: Hammond, Andrew David
(86) International application number: SE0100067
(87) International publication number: WO01051339

(56) References cited:
- EP-A1- 0 831 001
- EP-A2- 0 335 427
- WO-A1-92/00869
- SE-C2- 507 862

## Description

The present invention relates to a device at posts of the platform of a vehicle, and *of* the kind that comprise a lock devise built into the post, for a detachable locking of the post to the platform, and which comprises an operating lever for cooperation with a socket in the platform. Such a device is described in SE-A-507862 from which the features of the preamble of claim 1 have been derived.

### BACKGOUND OF THE INVENTION, AND THE PROBLEM

As a rule, the lock device of conventional posts has a dual function, in part to fix the post to the platform, and in part, independently of this lock function, to be able to fix one or more hatches to the post. These mechanisms are relatively complicated. Many lorries are loaded mainly from the rear end, and have detachable posts along the sides, without any particular lock mechanism to which boards are attached in order to laterally restrain the cargo, and for protection against cargo displacement. These posts are heavy and not easy to handle, in particular if they constitute part of the frame for the platform cover, and extend all the way to the handrails of the frame.

### THE PURPOSE OF THE INVENTION AND THE SOLUTION OF THE PROBLEM

The purpose of the invention is to achieve a post with a lock mechanism:
1. which has a simple construction,
2. which can be locked efficiently and reversibly to the edge of the platform, even though the socket for the post is recessed into the edge of the platform,
3. which by way of controlled movement can be lifted and lowered to the platform socket, and
4. which by a simple hand grip can be constricted, with transfer of torque, to the platform socket.

These tasks have been solved by the features of claim 1.

### DESCRIPTION OF THE DRAWINGS

The invention will be described more closely, in the form of an exemplary embodiment, with reference to the enclosed drawings.

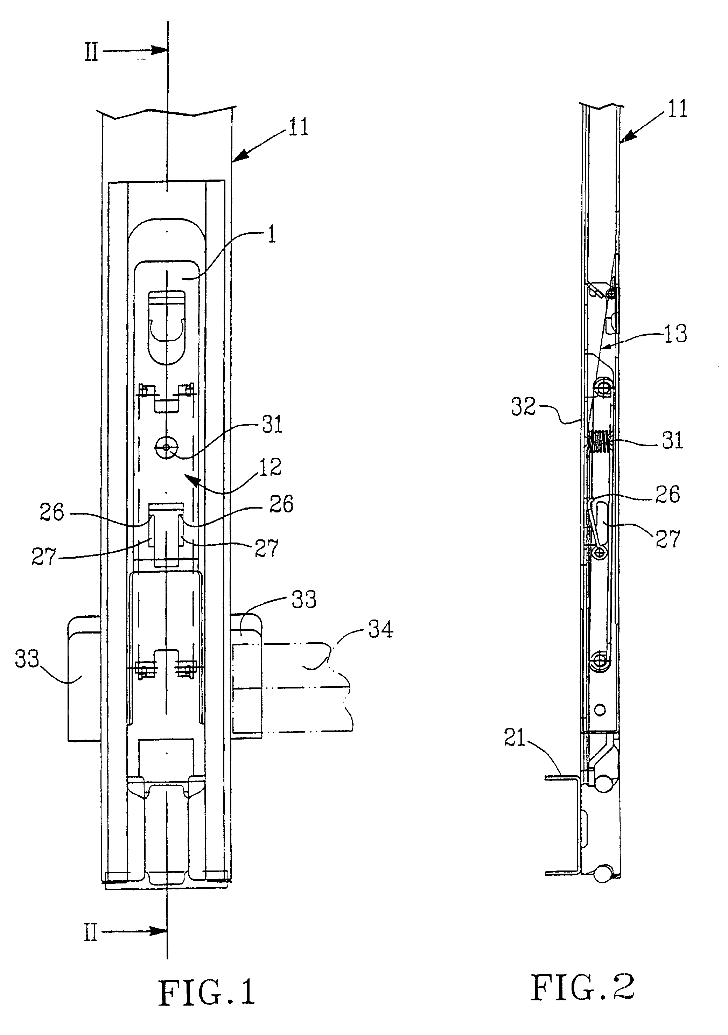

Fig. 1 shows the post of the invention in a frontal view.
Fig. 2 shows a section along the line II - II in Fig. 1.

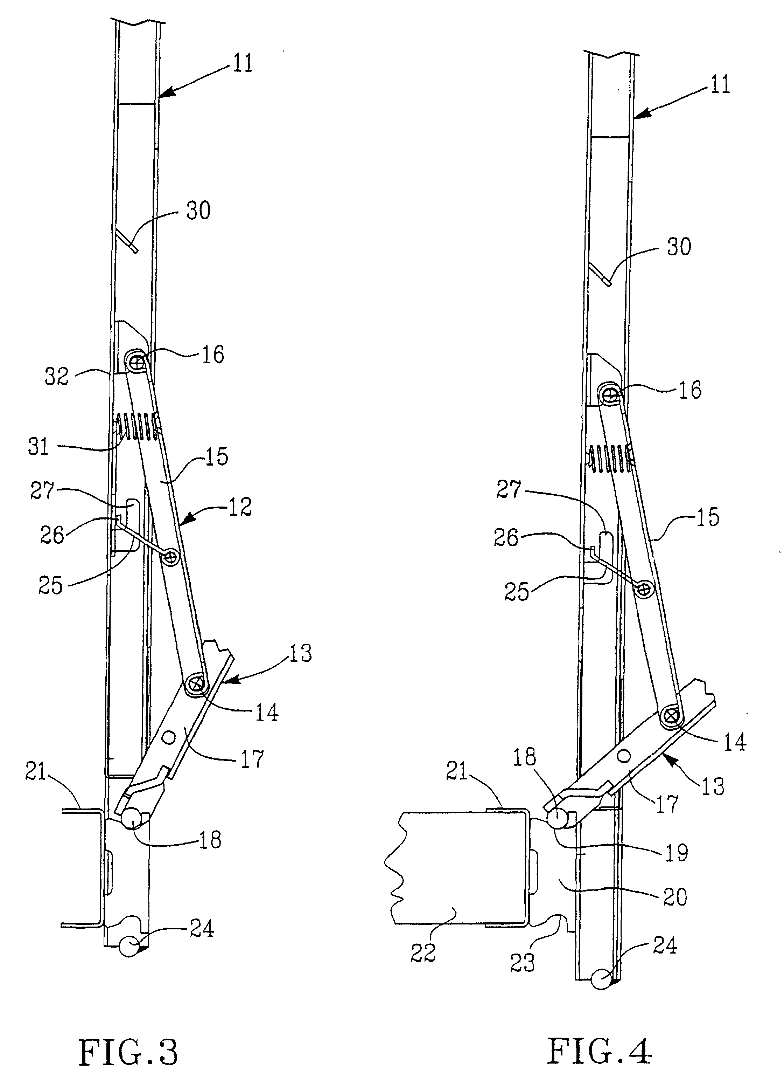

Figs. 3, 4, and 5 show sections, analogous to Fig. 2, through the post, with the lock mechanism in various open and closed positions, respectively.
Fig. 6 shows an alternative embodiment of part of the lock mechanism.

### DESCRIPTION OF THE EXEMPLARY EMBODIMENTS

The post, in its entirety referred to as 11, is comprised of a pipe of rectangular section, in the lower part of which is arranged a lock mechanism 2. This comprises an operating handle 13 in the form of a lever with two arms, the rotation point of which is comprised of an axle neck 14, journalled in bearings at one end of a link 15, which is rotably journalled to the inside of the post through an axle 16. To the shorter arm 17 of the operating handle 13 is attached a rotation and lock member 18, in the shape of a cylindrical axle, arranged to cooperate with a complementary shaped forklike lock member 19, at the upper part of a platform socket 20. This is welded to the edge 21 of a cargo platform 22. Another fork shaped lock member 23 is arranged on the bottom side of the platform socket 20, for cooperation with a lock bolt 24, fixed to the lower end of the post 11.

The swinging motion of the link 15 around the axle 16 is limited by a stop member 25, constituted of an arm, one end of which I journalled in bearings to the link 15, while the other end I capable of performing an axial motion in the longitudinal direction of the pole. An end stop member 26 allows the arm to swing out to an extent that the pole clears the platform socket 20, which takes place in cooperation with a catch 27, attached to the inside of the post.

The second, longer, lever arm 28 of the operating handle 13, designed as a handle, is equipped, at its free side, with a snap lock 29 or similar, which in the unfolded position, inserted into the post, engages a lock feather 30 during simultaneous compression of a pressure spring 31, positioned between the posterior wall 32 of the post 11, and the link 15.

At the lateral edges of the post 11, pockets 33 are arranged for lateral cargo guards 34, which are suitably comprised of removable boards.

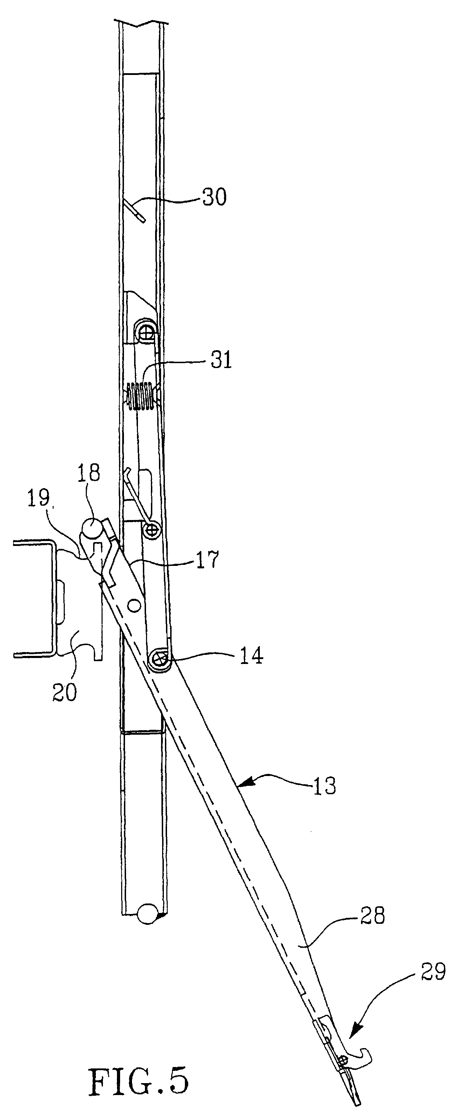

When mounting the post 11 in the platform socket 20, the post is lifted with the operating handle 13 folded, as shown in Fig. 5, so that the lock member 18 can engage the fork-shaped first lock member 19. By rotating the operating handle 13 upwards around the axle neck 14 with the lock member 18 resting against the lock member 19, the post is lifted through a controlled movement, to its position in the platform socket 20. Towards the end of the movement of the operating handle 13, the arm, which have been resting on the catch 27 throughout the previous rotating motion and limited the swing-out of the link 15, will leave the catch 27 and be displaced upwards, sp that the lock bolt can engage the second fork-shaped lock member 23. With the operating handle 13 in the folded position of the post, the snap lock 29 comes into action, and holds the operating handle in place.

In a similar manner, but in reversed order, the snap lock can be opened through applying pressure to the same, and the operating handle 13 can be swung outwards, whereby the post 11 initially is lowered in the vertical direction, sp that the lock bolt 24 can disengage from the lock fork 23, whereafter the post can be swung away from the platform socket 20, which may be retracted into the platform 22, in such a way that the post with the pockets 33 for the lateral cargo guards can be guided past the edge of the platform.

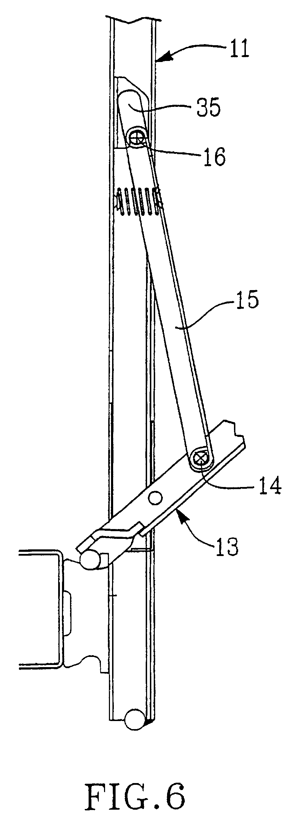

The stop member 25 may be embodied in various ways. For example, the arm 25, described above, may have the reverse function, i.e. it may be journalled in fixed bearings to the post, and in its lower end axially displaceable along a groove in the link 15. Another alternative is shown in Fig. 6, in which the stop member 25 is constituted by an extension 35 of the link 15, counted from the rotary axle 16 of the link. The extension is dimensioned in such a way that its end abuts the inside of the post when the post has been swung out far enough to clear the platform socket 20.

### COMPILATION OF REFERNCE NUMBERS

- 11: post
- 12: lock mechanism
- 13: operating handle
- 14: axle neck
- 15: link
- 16: axle
- 17: short lever
- 18: lock member
- 19: first lock member
- 20: platform socket
- 21: platform edge
- 22: cargo platform
- 23: second lock member
- 24: lock bolt
- 25: stop member / arm
- 26: end stop member
- 27: catch
- 28: longer lever
- 29: snap lock
- 30: lock feather
- 31: pressure spring
- 32: lateral wall
- 33: pocket
- 34: lateral cargo guards

## Claims

1. A device at posts (11) of the platform of a vehicle (22), and of the kind that comprise a lock mechanism (12) built into the post, for a reversible locking of the post to the platform, and which comprises an operating lever (13) for cooperation with a platform socket (20), wherein the operating handle (13) is designed as a lever with two arms (17, 28), which journalled in bearings with free rotation around the rotation point (14) of the lever to one end of a link (15), the opposite end of which is journalled in bearings to the post, one lever (17) of the operating handle (13) is equipped with a lock member (18) for cooperation with a corresponding first lock member (19) at the upper part of the platform socket (20), and a lock bolt (24) is arranged at the lower end of the post for cooperation with a corresponding second lock member (23) at the lower end of the platform socket (20),
***characterized in*,**
**that** at the link (15) is arranged by a stop member (25, 35), arranged to cooperate with the post (11) or alternatively with a catch (27) at the post and which stop member is arranged to limit the swing out of the link from the post (11) in such a degree that said lock member (24) is free and positioned outside the second lock member of the platform sockets (20).

2. A device according to claim 1,
***characterized in*,**
**that** the stop member (25) is constituted by an arm which in one end is joumalled in bearings to the link (15), and the other end of which can be limitedly displaced in the lateral directory of the post and which limitation of mobility is constituted by an end stop member (26).

3. A device according to claim 1,
***characterized in*,**
**that** the stop member (25) is constituted by an arm which in one end is journalled in bearings to the post (11), and the other end of which can be limitedly displaced along a groove in the link (15).

4. A device according to claim 1,
***characterized in*,**
**that** the stop member (25) is constituted by an axial extension of the link (15) past its rotation point (16) at the post, and in
**that** the length of the extension is chosen so that its end abuts the post when the link has been swung out sufficiently for the post to clear the platform socket (20).

5. A device according to claim 2,
***characterized in*,**
**that** the stop member (25) is equipped with an end stop member (26), arranged, in an end position, to cooperate with a catch (27), designed to allow displacement of the end stop member (26) without leaving the catch.

6. A device according to claim 1,
***characterized in*,**
**that** a snap lock (29) or similar is arranged at the free end of the operating handle (13) for locking the operating handle in the unfolded position to the post through the action of a pressure spring.

7. A device according to claim 1,
***characterized in*,**
**that** a pressure spring (31) is arranged between the inside of the post (11) and the link (15).

## Patentansprüche

1. Vorrichtung an Stützen (11) der Ladefläche eines Fahrzeugs (22) von der Art, daß sie zur reversiblen Arretierung der Stützen an der Ladefläche eine in der Stütze ausgebildete Arretiermechanik (12) aufweist, die einen mit einem Plattformsockel (20) zusammenwirkenden Betätigungsgriff (13) aufweist, der als Hebel mit zwei Armen (17, 28) ausgebildet ist, der in Lagern um einen Drehpunkt (14) des Hebels an einem Ende eines Verbindungsteiles (15) frei drehbar gelagert ist, dessen davon abgewandtes Ende in Lagern an der Stütze gelagert ist, wobei ein Arm (17) des Betätigungsgriffes (13) zum Zusammenwirken mit einem entsprechenden ersten Arretierelement (19) am oberen Teil des Ladeflächensockels (20) mit einem Arretierelement (18) ausgebildet ist, und am unteren Ende der Stütze zum Zusammenwirken mit einem zweiten Arretierelement (23) am unteren Ende des Ladeflächensockels (20) ein Arretierbolzen (24) angeordnet ist,
**dadurch gekennzeichnet,**
**daß** am Verbindungsteil (15) ein Anschlagelement (25, 35) angeordnet ist, das zum Zusammenwirken mit der Stütze (11) oder wahlweise mit einem Haken (27) an der Stütze vorgesehen ist, wobei das Anschlagelement dazu vorgesehen ist, das Ausschwingen des Verbindungsteiles (15) von der Stütze (11) innerhalb eines derartigen Grades zu begrenzen, daß das Arretierelement (24) frei und außerhalb des zweiten Arretierelementes des Ladeflächensockels (20) positioniert ist.

2. Vorrichtung nach Anspruch 1,
**dadurch gekennzeichnet,**
**daß** das Anschlagelement (25) von einem Arm gebildet ist, dessen eines Ende in Lagern am Verbindungsteil (15) gelagert ist und dessen anderes Ende in seitlicher Richtung der Stütze begrenzt verstellbar ist, wobei die begrenzte Beweglichkeit durch ein Endanschlagelement (26) bestimmt ist.

3. Vorrichtung nach Anspruch 1,
**dadurch gekennzeichnet,**
**daß** das Anschlagelement (25) von einem Arm gebildet ist, dessen eines Ende in Lagern an der Stütze (11) gelagert ist und dessen anderes Ende entlang einer Rille im Verbindungsteil (15) begrenzt verstellbar ist.

4. Vorrichtung nach Anspruch 1,
**dadurch gekennzeichnet ,**
**daß** das Anschlagelement (25) von einer axialen Verlängerung des Verbindungsteiles (15) hinter seinem Drehpunkt (16) an der Stütze gebildet ist, und daß die Länge der Verlängerung derartig gewählt ist, daß ihr Ende an der Stütze anliegt, wenn das Verbindungsteil für die Stütze ausreichend ausgeschwungen worden ist, um eine Freigabe vom Ladeflächensockel (20) zu bewirken.

5. Vorrichtung nach Anspruch 2,
**dadurch gekennzeichnet,**
**daß** das Anschlagelement (25) mit einem Endanschlagelement (26) ausgebildet ist, das in einer Endposition mit einem Haken (27) zusammenwirkt, der derartig ausgebildet ist, daß eine Verstellung des Endanschlagelementes (26) möglich ist, ohne den Haken zu verlassen.

6. Vorrichtung nach Anspruch 1,
**dadurch gekennzeichnet,**
**daß** am freien Ende des Betätigungsgriffes (13) ein Klappverschluß (29) zum Arretieren des Betätigungsgriffes in der ungefalteten Stellung an der Stütze mittels einer Druckfeder vorgesehen ist.

7. Vorrichtung nach Anspruch 1,
**dadurch gekennzeichnet,**
**daß** zwischen der Innenseite der Stütze (11) und dem Verbindungsteil (15) eine Druckfeder (31) vorgesehen ist.

## Revendications

1. Dispositif situé au niveau de montants (11) de la plate-forme (22) de chargement d'un véhicule, et du type qui comporte un mécanisme de verrouillage (12) monté dans le montant, pour un verrouillage réversible du montant sur la plate-forme, et qui comporte un levier d'actionnement (13) destiné à coopérer avec une douille de plate-forme (20), le manche d'actionnement (13) étant conçu sous la forme d'un levier muni de deux bras (17, 18), qui est tourillonné dans des paliers, avec rotation libre autour du point de rotation (14) du levier, situé sur une extrémité d'une biellette (15), dont l'extrémité opposée est tourillonnée dans des paliers situés sur le montant, un levier (17) du manche d'actionnement (13) étant muni d'un élément de verrouillage (18) destiné à coopérer avec un premier élément de verrouillage correspondant (19) au niveau de la partie supérieure de la douille de plate-forme (20), et un boulon de verrouillage (24) étant agencé au niveau de l'extrémité inférieure du montant, destiné à coopérer avec un second élément de verrouillage correspondant (23) au niveau de l'extrémité inférieure de la douille de plate-forme (20),
**caractérisé en ce que** la biellette (15) est agencée par un élément d'arrêt (25, 35), agencée pour coopérer avec le montant (11) ou en variante avec un loquet (25) situé au niveau du montant, et lequel élément d'arrêt est agencé pour limiter le basculement vers l'extérieur de la biellette à partir du montant (11) dans une mesure telle que ledit élément de verrouillage (24) est libre et est positionné à l'extérieur du second élément de verrouillage des douilles de plate-forme (20).

2. Dispositif selon la revendication 1,
**caractérisé en ce que** l'élément d'arrêt (25) est constitué d'un bras dont une première extrémité est tourillonée dans des paliers situés sur la biellette (15), et dont l'autre extrémité peut être déplacée de manière limitée dans la direction latérale du montant, et dont la limite de mobilité est constituée par un élément d'arrêt d'extrémité (26).

3. Dispositif selon la revendication 1,
**caractérisé en ce que** l'élément d'arrêt (25) est constitué d'un bras dont une première extrémité est tourillonnée dans des paliers situés sur le montant (11), et dont l'autre extrémité peut être déplacée de manière limitée le long d'une gorge située dans la biellette (15).

4. Dispositif selon la revendication 1,
**caractérisé en ce que** l'élément d'arrêt (25) est constitué d'un prolongement axial de la biellette (15) au-delà de son point de rotation (16) au niveau du montant, et **en ce que** la longueur du prolongement est choisie de manière à ce que son extrémité vienne en butée contre le montant lorsque la biellette est basculée suffisamment pour que le montant se dégage de la douille de plate-forme (20).

5. Dispositif selon la revendication 2,
**caractérisé en ce que** l'élément d'arrêt (25) est muni d'un élément d'arrêt d'extrémité (26), agencé, dans une position d'extrémité, pour coopérer avec un loquet (27), conçu pour permettre un déplacement de l'élément d'arrêt d'extérieur (26) sans quitter le loquet.

6. Dispositif selon la revendication 1,
**caractérisé en ce qu**'un verrou à crans (29) ou similaire est agencé au niveau de l'extrémité libre du manche d'actionnement (13) pour verrouiller le manche d'actionnement dans une position dépliée sur le montant par l'action d'un ressort de pression.

7. Dispositif selon la revendication 1,
**caractérisé en ce qu**'un ressort de pression (31) est agencé entre l'intérieur du montant (11) et la biellette (15).
